# EUROPEAN PATENT APPLICATION

(11) **EP 3 351 803 A1**
(43) Date of publication of application: **25.07.2018**
(21) Application number: 18151938.0
(22) Date of filing: 16.01.2018
(51) Int. Cl.: F04D 25/08, F04D 29/58

(54) **MOTOR AND AIR BLOWING APPARATUS INCLUDING THE SAME**

(30) Priority: 20.01.2017 JP 2017009012
(71) Applicant: Nidec Corporation, Minami-ku, Kyoto-shi, Kyoto 601-8205 (JP)
(72) Inventor: ISHIDA, Ryosuke, Kyoto, Kyoto 601-8205 (JP)
(74) Representative: Zimmermann, Tankred Klaus

(57) **Abstract**

A motor (100) includes a body portion (10), a circuit board (7), and a guide portion (56). The body portion (10) includes a rotor (1) rotating around a center axis (C) extending in a top-bottom direction and having a magnet (13), and a stator (2) facing the magnet (13) in a radial direction. The circuit board (7) is disposed below the body portion (10) and has an electronic component (71) mounted thereon. The guide portion (56) guides an airflow circulating downward in the top-bottom direction toward inside in the radial direction below the body portion (10). At least a part of the guide portion (56) faces the electronic component (71) in the radial direction.

## Description

### Field of the Invention

The present invention relates to a motor and an air blowing apparatus including the same.

### Description of the Related Art

A fan including an impeller unit, a motor unit, and a fan base is disclosed in Japanese Unexamined Patent Application Publication No. 2006-177309. The motor unit has a circuit board. The fan base is provided with at least one pillow portion. The pillow portion of the fan base faces an impeller boss to form an air vent and a flow passage so that part of a fluid driven by the rotation of the fan is guided into the boss to dissipate heat with respect to the entire motor accommodated in the boss.

According to the motor unit described in Japanese Unexamined Patent Application No. 2006-177309, part of the fluid flowing in from the air vent by the rotation of the fan is not guided to the circuit board within the impeller boss. On the other hand, if a distance between the fan base and the circuit board is decreased, a height of the pillow portion is reduced in order to prevent interference between the pillow portion and a blade. Therefore, an amount of fluid flowing into the impeller boss decreases, and an airflow does not sufficiently hit an electronic component of the circuit board. Therefore, there is a problem that an efficiency of cooling the electronic component is low.

### SUMMARY OF THE INVENTION

An exemplary motor of the invention includes a body portion, a circuit board, and a guide portion. The body portion includes a rotor rotating around a center axis extending in a top-bottom direction and having a magnet, and a stator facing the magnet in a radial direction. The circuit board is disposed below the body portion and has an electronic component mounted thereon. The guide portion guides an airflow circulating downward in the top-bottom direction toward inside in the radial direction below the body portion. At least a part of the guide portion faces the electronic component in the radial direction.

An exemplary air blowing apparatus of the invention includes the motor having the above-described configuration, and an impeller that is provided in the rotor and rotates around the center axis by driving the motor. The impeller rotates to suck air from an upper side and exhaust the air to a lower side.

According to the exemplary invention, it is possible to provide the motor capable of increasing an efficiency of cooling the electronic component, and the air blowing apparatus including the same.

The above and other elements, features, steps, characteristics and advantages of the present discloser will become more apparent from the following detailed description of the preferred embodiments with reference to the attached drawings.

### BRIEF DESCRIPTION OF THE DRAWINGS

Fig. 1 is a perspective view illustrating an air blowing apparatus including a motor according to a first embodiment of the invention;
Fig. 2 is a top view illustrating the air blowing apparatus including the motor according to the first embodiment of the invention;
Fig. 3 is a sectional view taken along a line A-O-A of Fig. 2;
Fig. 4 is a perspective view, when viewed from below, of the air blowing apparatus including the motor according to the first embodiment of the invention;
Fig. 5 is a perspective view, when viewed from below, of the air blowing apparatus from which a circuit board of the motor according to the first embodiment of the invention is removed;
Fig. 6 is a bottom view illustrating the air blowing apparatus from which the circuit board of the motor according to the first embodiment of the invention is removed;
Fig. 7 is an enlarged side sectional view illustrating an enlarged peripheral portion of the air blowing apparatus including the motor according to the first embodiment of the invention;
Fig. 8 is a perspective view of an insulator of the motor according to the first embodiment of the invention when viewed from below;
Fig. 9 is a side sectional view illustrating a dryer in which the air blowing apparatus including the motor according to the first embodiment of the invention is mounted;
Fig. 10 is a top view illustrating an air blowing apparatus including a motor according to a first modification example of the first embodiment of the invention;
Fig. 11 is a front sectional view illustrating a circuit board and a guide portion of a motor according to a second modification example of the first embodiment of the invention;
Fig. 12 is a front sectional view of a guide portion of a motor according to a third modification example of the first embodiment of the invention;
Fig. 13 is a side sectional view of a dryer in which an air blowing apparatus including a motor according to a second embodiment of the invention is mounted; and
Fig. 14 is a sectional view perpendicular to an axial direction of the motor according to the second embodiment of the invention.

### DETAILED DESCRIPTION OF THE PREFERRED EMBODIMENTS

Hereinafter, exemplary embodiments of the invention will be described with reference to the drawings. In the present specification, a direction in which a center axis C extends with respect to a motor 100 and an air blowing apparatus 200 is simply referred to as an "axial direction". Furthermore, a direction from a circuit board 7 to a body portion 10 is simply referred to as "upward" and a direction from the body portion 10 to the circuit board 7 is simply referred to as "downward" in the axial direction. In addition, a surface facing upward in the axial direction is referred to as an "upper surface" and a surface facing downward in the axial direction is referred to as a "lower surface" on a surface of each configuration element.

A radial direction with respect to the center axis C is simply referred to as a "radial direction" and a circumferential direction around the center axis C is simply referred to as a "circumferential direction". Furthermore, a direction toward the center axis C is simply referred to as "inside" and a direction away from the center axis C is simply referred to as "outside" in the radial direction. Furthermore, a side surface facing inside in the radial direction is referred to as an "inside surface" and a side surface facing outside in the radial direction is referred to as an "outside surface" on the surface of each configuration element.

With respect to an apparatus or a machine including the motor 100, a direction of an airflow sent from the air blowing apparatus 200 is referred to as an "air blowing direction". In addition, a direction from an upstream to a downstream in the air blowing direction is simply referred to as "front side" and a direction from the downstream to the upstream is simply referred to as "back side" in the air blowing direction.

The terms of the directions and the surfaces which are described above are not intended to limit a positional relationship, a direction, and the like in a case of being incorporated in an actual machine.

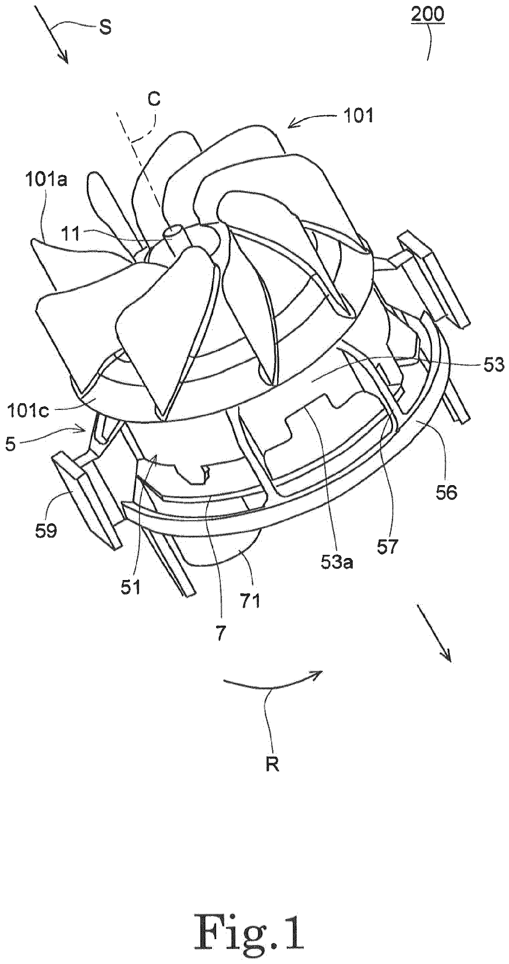

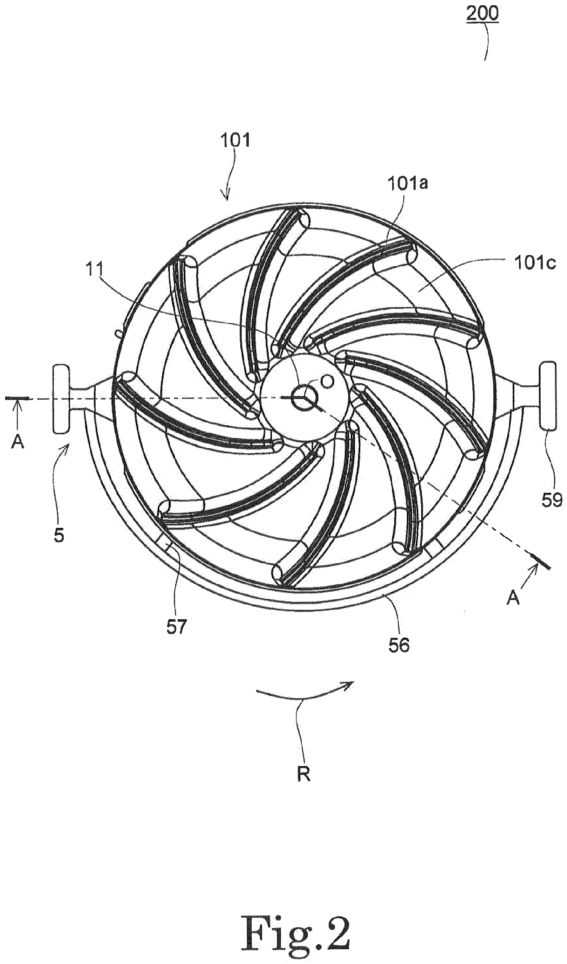

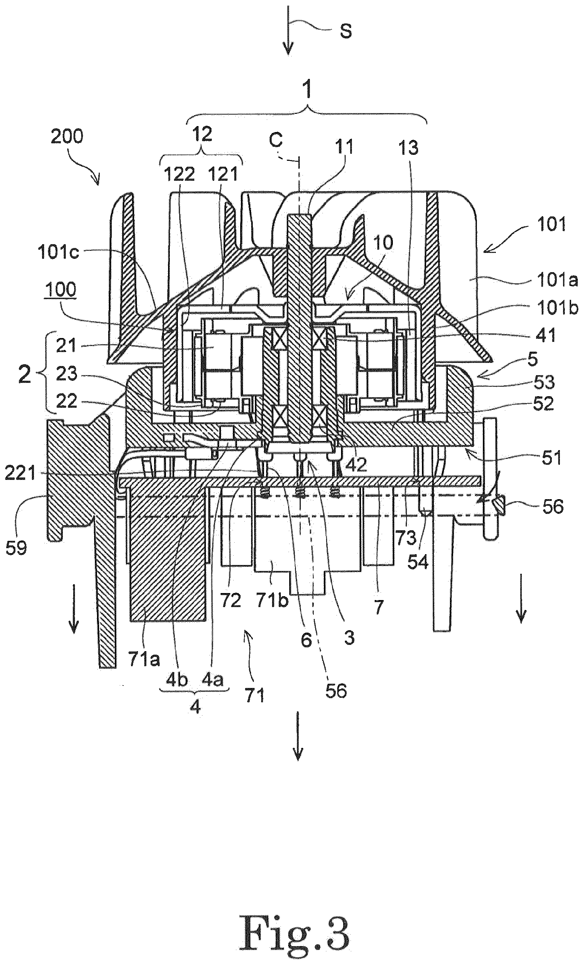

Fig. 1 is a perspective view illustrating the air blowing apparatus 200 including the motor 100 according to a first embodiment of the invention. Fig. 2 is a top view illustrating the air blowing apparatus 200. Fig. 3 is a sectional view taken along a line A-O-A of Fig. 2. The air blowing apparatus 200 includes the motor 100 and an impeller 101.

The impeller 101 is an impeller attached to the motor 100 from an upper side and includes a plurality of blades 101a, a peripheral wall member 101b, and a base portion 101c. The base portion 101c has an umbrella shape and a diameter of a section of the base portion 101c in the axial direction increases as the base portion 101c extends downward. That is, the inner diameter of the base portion 101c is gradually increased downward. The plurality of blades 101a are disposed on an outside surface of the base portion 101c side by side in the circumferential direction. The peripheral wall member 101b is formed in a cylindrical shape and protrudes downward from the inside surface of the base portion 101c. The impeller 101 rotates around the center axis C extending in a top-bottom direction by driving the motor 100 and generates airflow.

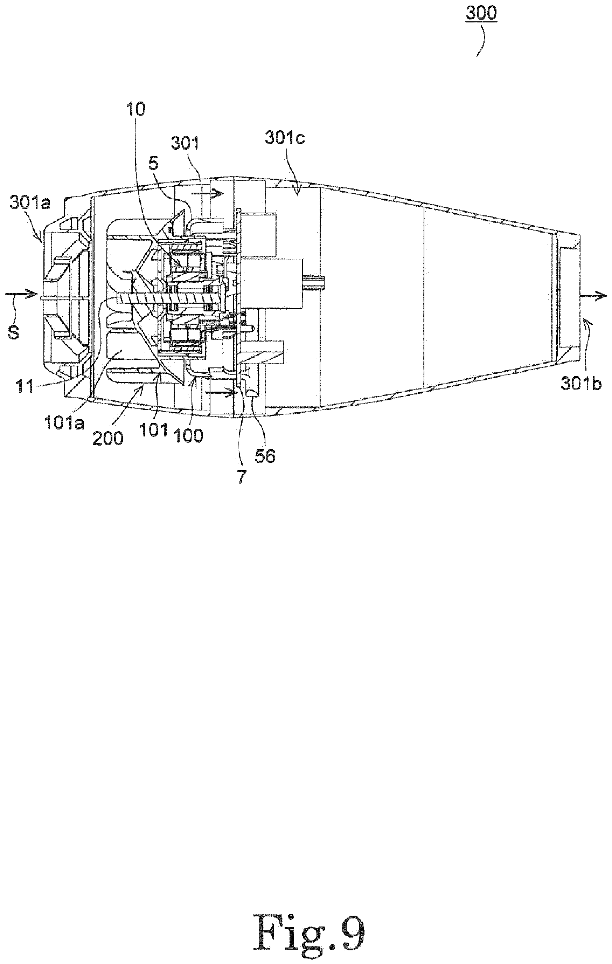

The motor 100 is a driving device which drives and rotates the impeller 101 and, for example, is mounted in an electric machine such as a dryer 300 (see Fig. 9 described later). The motor 100 includes the body portion 10, a bearing holder 4, a bracket 5, a tie pin 6, and the circuit board 7.

The body portion 10 has a rotor 1 and a stator 2. The rotor 1 is a rotor of the motor 100 and has a shaft 11, a rotor holder 12, and a magnet 13. The shaft 11 is disposed on a rotation axis extending in a top-bottom direction (direction of the center axis C). The rotor holder 12 holds the magnet 13 and is rotatable together with the shaft 11 and the impeller 101. The motor 100 is an outer rotor motor. The magnet 13 is disposed outside the stator 2 in the radial direction and faces the stator 2 in the radial direction.

The rotor holder 12 is disposed inside the peripheral wall member 101b of the impeller 101 in the radial direction and accommodates the stator 2 therein. The rotor holder 12 includes a disk-shaped lid portion 121 and a tubular cylindrical portion 122. The lid portion 121 extends outward from the shaft 11 in the radial direction. The cylindrical portion 122 extends downward in the axial direction from an outer peripheral edge of the lid portion 121. The peripheral wall member 101b of the impeller 101 is attached to the outside of the cylindrical portion 122 in the radial direction. The magnet 13 is held on the inside surface of the cylindrical portion 122.

The stator 2 is an armature of the motor 100 and is held on the outside surface of the bearing holder 4. The stator 2 faces the rotor 1 in the radial direction and drives and rotates the rotor 1. The stator 2 includes a stator core 21, a plurality of coil portions 22, and an insulator 23.

The stator core 21 is a laminated steel plate in which electromagnetic steel plates are laminated in the axial direction, and is disposed outside the bearing holder 4 in the radial direction and inside the magnet 13 in the radial direction.

Each of the coil portions 22 is a winding member in which a conductor wire (for example, a lead wire 221) is wound around the insulator 23, and is arranged in the circumferential direction. The end portion of the lead wire 221 is tied to the tie pin 6 in a state where an insulating layer is peeled off. The tie pin 6 constitutes a terminal for electrically connecting the coil portion 22 and the circuit board 7 to each other.

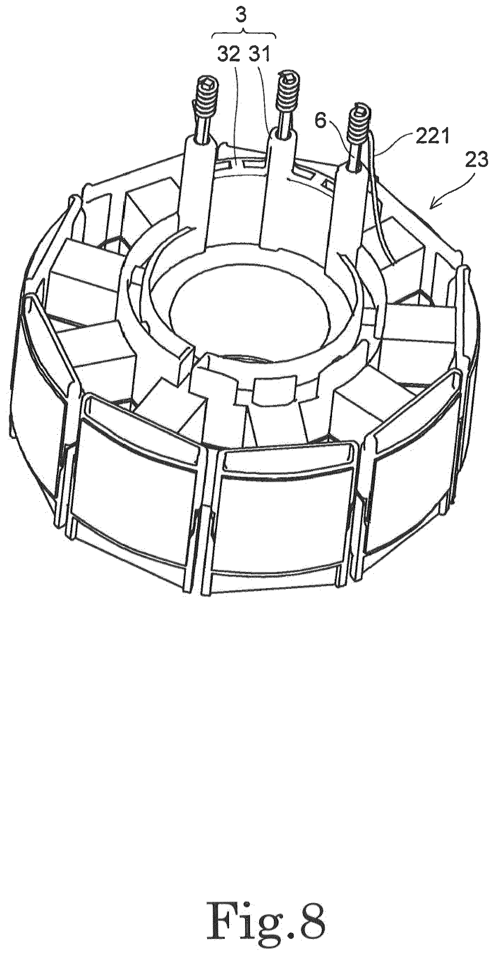

The insulator 23 is an insulating member formed of, for example, resin and covers the stator core 21. The stator core 21 and the coil portion 22 are electrically separated by the insulator 23. The insulator 23 has a support member 3 (see also Fig. 8) that supports the tie pin 6. The support member 3 protrudes from a lower end of the insulator 23 to the circuit board 7. The support member 3 includes a pin support portion 31 that supports the tie pin 6 and a pin connecting portion 32 that connects the adjacent pin support portions 31 (see Fig. 8) to one another.

The bearing holder 4 is formed of, for example, a metal and holds a bearing 41 above and a bearing 42 below. The bearing holder 4 is disposed outside the shaft 11 in the radial direction and inside the stator 2 in the radial direction. The bearings 41 and 42 rotatably support the shaft 11. For example, a ball bearing, a sleeve bearing, or the like is used as the bearings 41 and 42.

The bearing holder 4 includes a cylindrical portion 4a extending in the axial direction and a rectangular plate portion 4b. The bearings 41 and 42 are held inside the cylindrical portion 4a. The plate portion 4b extends outside in the radial direction from a periphery of a lower end portion of the cylindrical portion 4a. In the axial direction, a position of a lower surface of the plate portion 4b near the cylindrical portion 4a is substantially the same as a position of a lower surface of a cover plate 52 of the bracket 5. An upper surface and a lower surface of both end portions of the plate portion 4b in a longitudinal direction are caught in the cover plate 52. Therefore, the bearing holder 4 is held by the bracket 5. In the embodiment, the plate portion 4b and the cylindrical portion 4a are formed of different members, but may be constituted by a single member.

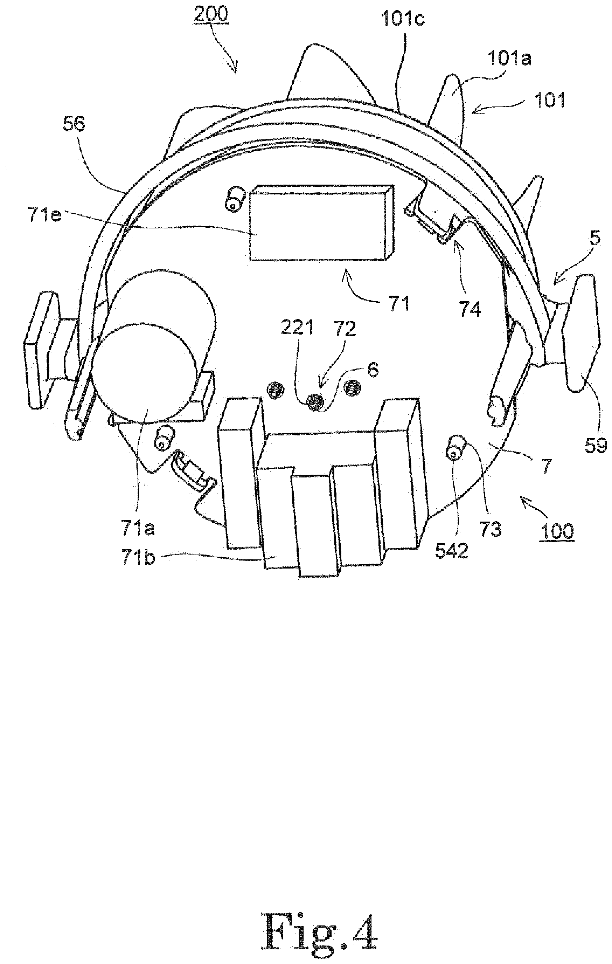

Fig. 4 is a bottom view illustrating the air blowing apparatus 200. The circuit board 7 is disposed below the body portion 10. The circuit board 7 has a substantially disk shape and is formed of, for example, resin such as epoxy resin. As described below, the circuit board 7 is held by the bracket 5.

The circuit board 7 includes a plurality of first holes 72, a plurality of second holes 73, and a plurality of board cutout portions 74. In the embodiment, the circuit board 7 includes three first holes 72, three second holes 73, and two board cutout portions 74. The first holes 72 and the second holes 73 are through-holes that penetrate the circuit board 7 from the upper surface to the lower surface. The board cutout portions 74 are formed at two positions on a peripheral edge of the circuit board 7. Two board cutout portions 74 are opposite to each other with the shaft 11 therebetween when viewed in the axial direction.

An electronic component 71 is mounted on the lower surface of the circuit board 7. The electronic component 71 includes an AC/DC converter, an inverter, a control circuit, a position detection circuit, and the like. The control circuit controls the rotation of the rotor 1 and includes an IC 71e. The IC 71e is mounted to extend in a direction perpendicular to the axial direction. There is no particular limitation on the IC 71e, but for example, an intelligent power module (IPM) can be used.

The AC/DC converter is, for example, a conversion circuit that converts AC power supply supplied from a commercial power supply (not illustrated) to DC power. The AC/DC converter includes elements which are relatively large and heavy such as an electrolytic capacitor 71a and a choke coil 71b.

The electrolytic capacitor 71a is an electric storage element that stores charge of relatively high capacity. The choke coil 71b is a winding member in which a winding is wound around an iron core and functions as a noise filter for removing noise of power supply of the motor 100. The inverter is a power supply circuit that supplies supply power to the stator 2 and supply power is generated by using DC electric power output from the AC/DC converter.

The position detection circuit is a detection portion that detects the position (that is, a rotation angle) of the rotor 1 based on an induced voltage generated in the coil portion 22 of the stator 2 due to the rotation of the rotor 1. The induced voltage is a voltage generated in the coil portion 22 by a magnetic force of the magnet 13 when the rotor 1 is rotated.

Since the electronic component 71 is mounted on the lower surface of the circuit board 7, the shortest distance between the stator 2 and the circuit board 7 is shorter than that of a case where the electronic component 71 is mounted on the upper surface of the circuit board 7. In addition, the shortest distance between the stator 2 and the circuit board 7 is not affected by the size of the electronic component 71 mounted on the circuit board 7 in the axial direction. Therefore, even if an element, of which particularly the size in the axial direction is relatively large such as the electrolytic capacitor 71a used in the AC/DC converter, is mounted on the circuit board 7, it is possible to prevent an increase in the distance between the stator 2 and the circuit board 7. Therefore, it is possible to reduce disconnection of the wiring (particularly, the lead wire 221) between the stator 2 and the circuit board 7.

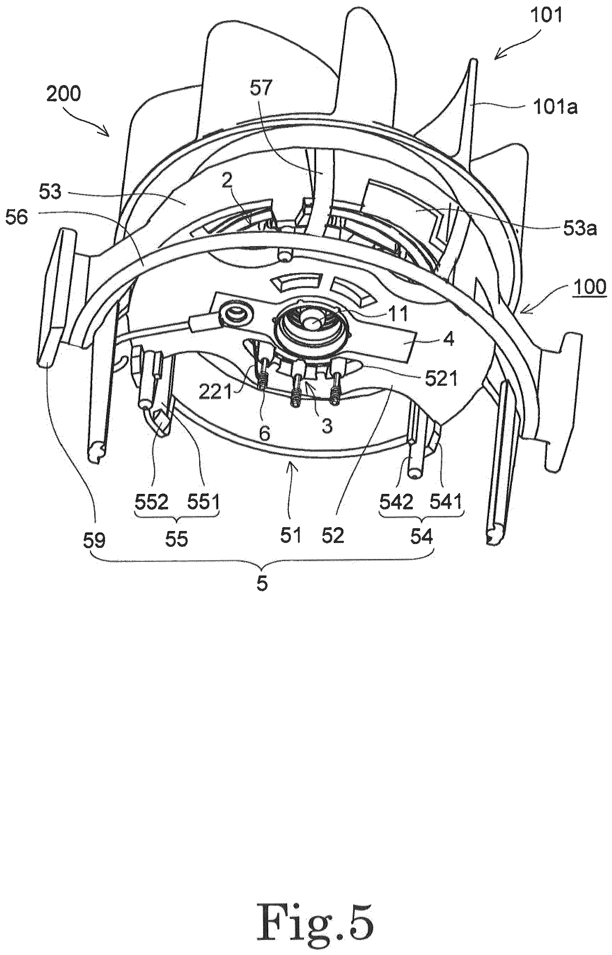

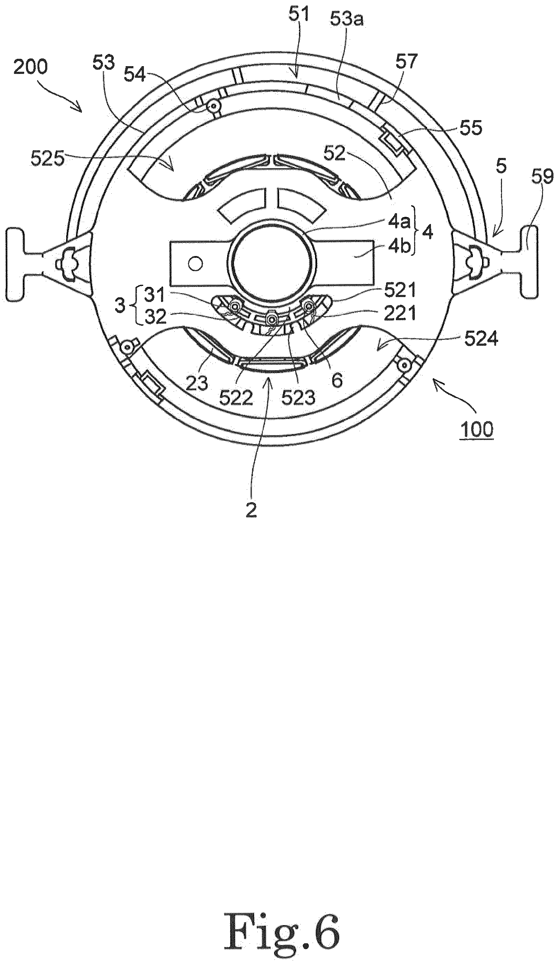

Fig. 5 is a perspective view of the air blowing apparatus 200 from which the circuit board 7 is removed when viewed from below. Fig. 6 is a bottom view (lower view) illustrating the air blowing apparatus 200 from which the circuit board 7 is removed. The bracket 5 is attached to the lower portion of the stator 2. The bracket 5 is formed by, for example, injection molding using a resin material and includes a holding portion 51, a guide portion 56, a connecting portion 57, and a locking portion 59.

The holding portion 51 is disposed at the lower portion of the body portion 10 and holds the circuit board 7. The holding portion 51 includes the cover plate 52, a cylindrical portion 53, a plurality of board support portions 54, and a plurality of the hook members 55. In the embodiment, three board support portions 54 are provided and two hook members 55 are provided.

The cylindrical portion 53 has a substantially circular cross section perpendicular to the axial direction and covers at least a part of the outside surface of the body portion 10 above the circuit board 7. The outside surface of the cylindrical portion 53 is provided with a pair of the locking portions 59.

The board support portion 54 and the hook member 55 are provided at the lower end of the cylindrical portion 53. In addition, a cutout portion 53a is provided at the lower end of the cylindrical portion 53. At least a part of the outer edge portion of the circuit board 7 protrudes further outside in the radial direction than the outer edge of the cylindrical portion 53 when viewed in the axial direction.

The cover plate 52 holds the plate portion 4b of the bearing holder 4. Both ends of the cover plate 52 in the longitudinal direction are connected to the cylindrical portion 53 at two positions where the pair of the locking portions 59 is connected to the holding portion 51 when viewed in the axial direction. Therefore, two bracket opening portions 524 and 525 are formed between the cylindrical portion 53 and the cover plate 52 in a lateral direction of the cover plate 52.

The pair of locking portions 59 are opposite to each other with the shaft 11 therebetween and protrudes further outward than the guide portion 56 in the radial direction. The locking portions 59 are a member for being locked to an inner wall of the duct through which the airflow circulates. The locking portions 59 are locked to a groove portion (not illustrated) provided in the inner wall of the duct. Thereby, the motor 100 is attached to an electric machine in which the air blowing apparatus 200 is mounted. As illustrated in Fig. 9, in the embodiment, the duct is a dryer housing 301 of the dryer 300. The locking portions 59 are locked to a groove portion (not illustrated) provided in an inner wall of the dryer housing 301. Thereby, the motor 100 is attached to the dryer 300 which will be described later.

The longitudinal direction of the cover plate 52 is parallel to a connecting line which connects a center of a portion of the peripheral edge of the lower end of the cylindrical portion 53 connected to one of the pair of the locking portions 59 and a center of a portion of the peripheral edge of the lower end of the cylindrical portion 53 connected to the other of the pair of the locking portions 59 to each other when viewed in the axial direction. That is, both ends of the cover plate 52 in the longitudinal direction are connected to the cylindrical portion 53 at two positions when viewed in the axial direction. The cover plate 52 is connected to the cylindrical portion 53 at two positions where vibration of the motor 100 is very easily transmitted. Therefore, the vibration of the motor 100 can be efficiently transmitted to the electric machine. Therefore, it is possible to reduce an eigenvalue (vibration frequency) generated in the bracket 5. Furthermore, it is possible to increase an attaching strength when the motor 100 is attached to the electric machine.

The cover plate 52 includes a connection opening portion 521, two first protrusion portions 522 and two second protrusion portions 523. The connection opening portion 521 penetrates the cover plate 52 from the upper surface to the lower surface. The first protrusion portion 522 and the second protrusion portion 523 are provided at a peripheral edge of the connection opening portion 521.

The board support portion 54 is provided at the peripheral edge of the lower end of the cylindrical portion 53. The board support portion 54 includes a stopper portion 541 and a column portion 542. The stopper portion 541 protrudes downward from the lower end of the cylindrical portion 53 in the axial direction. The column portion 542 is provided inside the stopper portion 541 in the radial direction and on the inside surface of the cylindrical portion 53, and protrudes further downward than the lower end of the stopper portion 541 in the axial direction.

The hook member 55 is provided at the lower end of the cylindrical portion 53. The hook member 55 includes an extension portion 551 and a claw portion 552. The extension portion 551 extends from the cylindrical portion 53 toward the circuit board 7. The claw portion 552 protrudes from the extension portion 551 toward the circuit board 7. Specifically, the extension portion 551 extends downward in the axial direction from the peripheral edge of the lower end of the cylindrical portion 53 toward the circuit board 7. The claw portion 552 protrudes inside in the radial direction from the inside surface of the extension portion 551 toward the circuit board 7.

When the motor 100 is assembled, the tie pin 6 is inserted into the first hole 72 (see Fig. 4) and penetrates the first hole 72. The tie pin 6 is soldered to the circuit board 7 and is electrically connected to the circuit board 7. The board support portion 54 is press-fitted into the second hole 73 (see Fig. 4). The hook member 55 is attached to the board cutout portion 74 by snap-fitting. That is, the hook member 55 is engaged with the board cutout portion 74 by elastic deformation. The circuit board 7 is held by the holding portion 51 of the bracket 5 by a press fitting structure by the board support portion 54, a snap fit structure by the hook member 55, and a soldering structure of the tie pin 6.

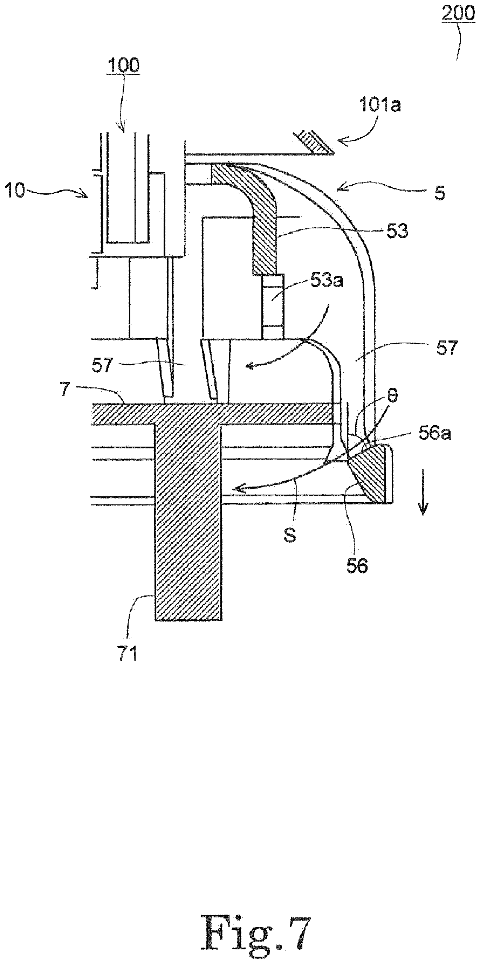

Fig. 7 is an enlarged side sectional view illustrating an enlarged peripheral portion of the air blowing apparatus 200. As illustrated in Figs. 1 and 2, the guide portion 56 has an arc shape (a portion of the circumference) the center of which is the center axis C when viewed in the axial direction. In the embodiment, the guide portion 56 has a semicircular circumferential shape when viewed in the axial direction. That is, the guide portion 56 extends in a circumferential direction. The guide portion 56 is disposed outside in the radial direction and below the body portion 10 and the holding portion 51, and at least a part of the guide portion 56 faces the electronic component 71 on the circuit board 7 in the radial direction. In addition, the lower end of the guide portion 56 is disposed above the lower end of the electronic component 71.

The guide portion 56 is disposed outside the circuit board 7 in the radial direction. At least an upper portion of a surface 56a inside the guide portion 56 in the radial direction is inclined inside in the radial direction as the upper portion extends downward. At least a part of the guide portion 56 is disposed at the position same as that of the cutout portion 53a of the cylindrical portion 53 in the circumferential direction. That is, the cutout portion 53a is disposed at the position same as that of at least a part of the guide portion 56 in the circumferential direction. As described below, the guide portion 56 guides the airflow (arrow S in Fig. 1 and the like), which circulates in the top-bottom direction, downward and inside the body portion 10 in the radial direction.

That is, the motor 100 includes the body portion 10 having the rotor 1 that rotates around the center axis C extending in the top-bottom direction and has the magnet 13, and the stator 2 that faces the magnet 13 in the radial direction. The motor 100 includes the circuit board 7 which is disposed below the body portion 10 and on which the electronic component 71 is mounted. The motor 100 includes the guide portion 56 that guides the airflow, which circulates downward in the top-bottom direction, toward inside in the radial direction below the body portion 10. At least a part of the guide portion 56 faces the electronic component 71 in the radial direction.

A plurality of the connecting portions 57 are disposed side by side in the circumferential direction and extend outside in the radial direction and downward from the outer peripheral end of the holding portion 51. Specifically, the connecting portions 57 extend outside in the radial direction and downward from the outside surface of the cylindrical portion 53 of the holding portion 51. The connecting portion 57 connects the holding portion 51 and the guide portion 56 to each other. The locking portion 59 is provided to protrude outside in the radial direction from the outer periphery portion of the connecting portion 57. In the embodiment, four connecting portions 57 are disposed in the circumferential direction.

Fig. 8 is a perspective view of the insulator 23 when view from below. Upward in Fig. 8 corresponds to downward in Fig. 3 and downward in Fig. 8 corresponds to upward in Fig. 3.

The support member 3 supports the tie pin 6 and protrudes downward (upward in Fig. 8) from the lower end of the insulator 23. Since the tie pin 6 is supported by the support member 3, even in a case where the vibration of the motor 100 is generated, the wiring between the coil portion 22 and the circuit board 7 can be stabilized.

The support member 3 is disposed within the connection opening portion 521 (see Fig. 5) when viewed in the axial direction and penetrates the connection opening portion 521 to extend in the axial direction. The tie pin 6 extends downward from a tip (lower end) of the support member 3, is inserted into the first hole 72 (see Fig. 4) of the circuit board 7, and is soldered to the circuit board 7. Thereby, the coil portion 22 is electrically connected to a wiring pattern on the circuit board 7 via the connection opening portion 521.

The support member 3 includes three pin support portions 31 and two pin connecting portions 32. The number of the pin support portions 31 is not limited to three and may be plural other than three. Each of the pin support portions 31 protrudes from the insulator 23 toward the circuit board 7 below and supports the tie pin 6. The pin connecting portion 32 connects adjacent pin support portions 31 to one another.

The first protrusion portion 522 and the second protrusion portion 523 are provided at the peripheral edge of the connection opening portion 521 in the cover plate 52. The first protrusion portion 522 protrudes outside in the radial direction from the peripheral edge of the connection opening portion 521 and is in contact with the inside surface of the pin connecting portion 32 of the support member 3. The second protrusion portion 523 protrudes inside in the radial direction from the peripheral edge of the connection opening portion 521 and is in contact with the outside surface of the pin connecting portion 32 of the support member 3.

Thereby, a displacement of the support member 3 inside in the radial direction and a displacement outside in the radial direction are suppressed and the strength of the support member 3 can be improved. In addition, the vibration of the motor 100 transmitted from the cover plate 52 via the first protrusion portion 522 and the second protrusion portion 523 can be reduced by the pin connecting portion 32 and is unlikely to be transmitted to the pin support portion 31. Therefore, even in a case where the vibration of the tie pin 6 is generated, the wiring (particularly, the lead wire 221) between the coil portion 22 and the circuit board 7 can be stabilized.

In the air blowing apparatus 200 having the configuration described above, when electric power is supplied to the coil portion 22 via the lead wire 221, a magnetic flux is generated in the stator core 21. A torque is generated in the circumferential direction by an operation of the magnetic flux between the stator core 21 and the magnet 13. As a result, the rotor 1 rotates around the center axis C with respect to the stator 2 in a rotation direction R (see Figs. 1 and 2).

When the rotor 1 rotates, the impeller 101 rotates in the rotation direction R and air is sucked from the upper side of the impeller 101. The air sucked from the upper side circulates between the adjacent blades 101a and is accelerated outward in the radial direction and downward by the rotating impeller 101. The air which is accelerated outward in the radial direction and downward is exhausted further downward than the impeller 101.

That is, the air blowing apparatus 200 includes the motor 100, and the impeller 101 that is provided in the rotor 1 and is rotated around the center axis C by driving the motor 100. The impeller 101 rotates to suck air from the upper side and exhaust the air to the lower side. Therefore, as indicated by an arrow S (see Figs. 1 and 3), the airflow circulating downward in the top-bottom direction is generated.

The motor 100 includes the guide portion 56. That is, in this case, the airflow circulating downward in the top-bottom direction is guided inward in the radial direction below the body portion 10 by the guide portion 56. At least a part of the guide portion 56 faces the electronic component 71 in the radial direction. Therefore, part of the airflow circulating downward in the top-bottom direction is guided inward in the radial direction and the airflow guided inward in the radial direction hits the electronic component 71. The airflow hitting the electronic component 71 is directed downward. Therefore, it is possible to improve the efficiency of cooling the electronic component 71 of the motor 100.

Next, the dryer 300 will be described below as an application example of the electric machine in which the air blowing apparatus 200 including the motor 100 according to the embodiment is mounted. Fig. 9 is a side sectional view illustrating a configuration example of the dryer 300 in which the air blowing apparatus 200 is mounted. A front side of the dryer 300 in the air blowing direction corresponds to downward in the axial direction of the motor 100. A back side of the dryer 300 in the air blowing direction corresponds to upward in the axial direction of the motor 100.

The dryer 300 is an electric machine for blowing hot air and is used as, for example, a household or commercial hairdryer for drying the head hair. The dryer 300 may be a dryer such as an industrial dryer for drying or heating matters other than the head hair.

The dryer 300 includes the air blowing apparatus 200 having the motor 100, the dryer housing 301, a flow regulating member (not illustrated), and a heater (not illustrated). The dryer housing 301 has a tubular shape, an inlet port 301a is opened in one end surface of the dryer housing 301 in the axial direction, and an outlet port 301b is opened in the other end surface opposite to one end surface.

An air blowing passage 301c that connects the inlet port 301a and the outlet port 301b to each other is formed by an inner space of the dryer housing 301. The air blowing apparatus 200 and the heater are disposed in the air blowing passage 301c in this order from the upstream to the downstream in a circulating direction of the airflow (arrow S) .

The air blowing apparatus 200 is disposed between the inlet port 301a and the heater. The impeller 101 of the air blowing apparatus 200 is disposed on the back side of the bracket 5 in the air blowing direction. The axial direction of the air blowing apparatus 200 is parallel to the air blowing direction of the dryer 300.

A plurality of stationary blades (not illustrated) are disposed between the motor 100 and the dryer housing 301 side by side in the circumferential direction. The flow regulating member that regulates air is constituted by the plurality of stationary blades.

The heater is disposed between the air blowing apparatus 200 and the outlet port 301b. The heater is constituted by an electric heating wire such as a nichrome wire which generates heat by energization, and heats air sucked from the inlet port 301a.

In the dryer 300 having the configuration described above, when a power supply switch (not illustrated) is turned on, the rotor 1 of the motor 100 rotates and the impeller 101 of the air blowing apparatus 200 rotates. Thereby, air is sucked from the outside of the dryer housing 301 via the inlet port 301a and the airflow flowing into the air blowing passage 301c is generated. The airflow flowing into the air blowing passage 301c is sent outside in the radial direction and downward the air blowing apparatus 200 by the rotation of the impeller 101. The airflow is guided between the plurality of the stationary blades by the inside surface of the dryer housing 301 and circulates toward the heater. The air flowing around the heater is heated by the heater. The heated air is blown out from the outlet port 301b to the outside of the dryer housing 301. Therefore, the dryer 300 can dry the head hair of a user or the like.

In this case, part of the airflow circulating from the back side in the air blowing direction to the front side in the air blowing direction is guided inward in the radial direction by the guide portion 56. Since at least a part of the guide portion 56 faces the electronic component 71 in the radial direction, the airflow guided inward in the radial direction hits the electronic component 71. The airflow which hits the electronic component 71 is directed downward, is heated by the heater, and then is discharged from the outlet port 301b to the outside of the dryer housing 301. In this case, the air a temperature of which has not yet been increased by the heater hits the electronic component 71. Therefore, it is possible to improve the efficiency of cooling the electronic component 71 of the motor 100.

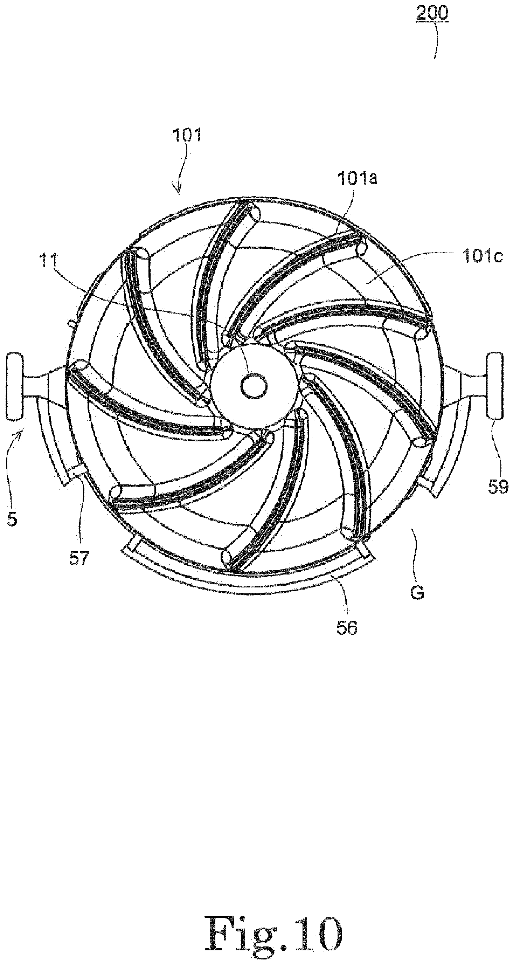

As illustrated in Fig. 10, a plurality of guide portions 56 may be provided side by side in the circumferential direction. Thereby, the airflow can hit the electronic component 71 from a plurality of directions according to the arrangement of the electronic component 71. Accordingly, it is possible to improve the efficiency of cooling the electronic component 71. In addition, a gap G between adjacent guide portions 56 penetrates in the axial direction. Therefore, the airflow flowing downward without being directed inside in the radial direction can be easily obtained.

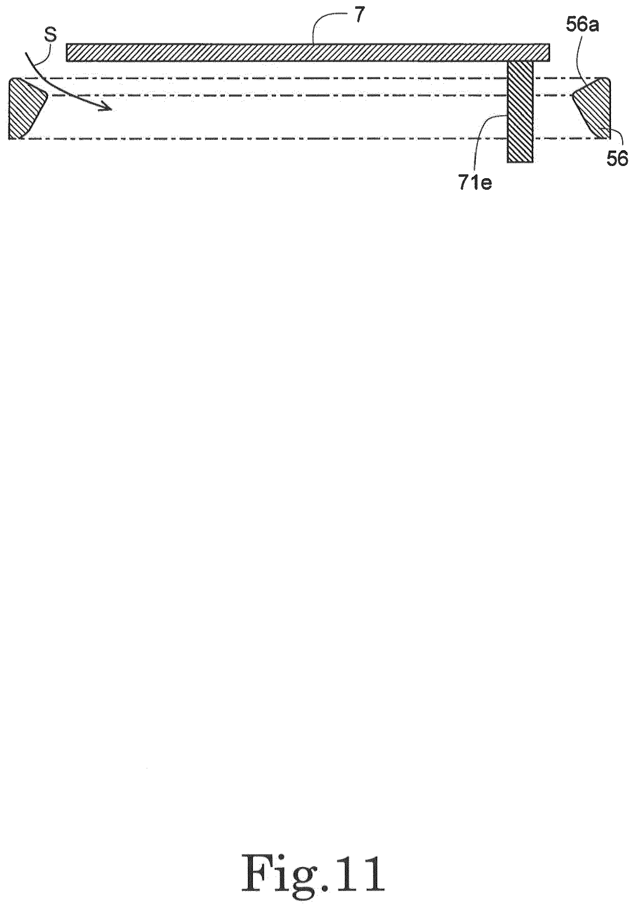

Fig. 11 is a front sectional view illustrating a circuit board 7 and a guide portion 56 of a motor 100. As illustrated in Fig. 11, an IC 71e may be mounted to extend in the axial direction. That is, the IC 71e may stand to be mounted on the circuit board 7. In this case, a volume of air hitting the IC 71e increases and it is possible to efficiently cool the IC 71e at a high temperature. Another electronic component 71 other than the IC 71e may be mounted to extend in the axial direction.

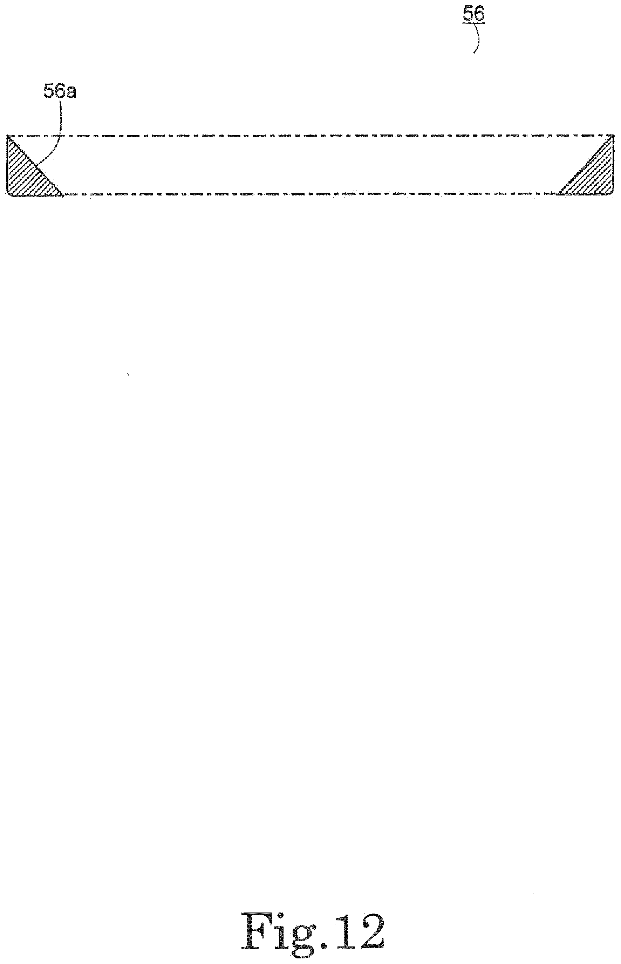

Fig. 12 is a front sectional view illustrating a guide portion 56 of a motor 100. As illustrated in Fig. 12, a surface 56a of the guide portion 56 inside in the radial direction may be inclined inward in the radial direction as it extends downward from an upper end to a lower end of the guide portion 56. Thereby, it is possible to guide the airflow inside in the radial direction while suppressing an increase in a length of the guide portion 56 in the axial direction.

According to the embodiment, the motor 100 includes a body portion 10 having a rotor 1 that rotates around a center axis C extending in the top-bottom direction and has a magnet 13, and a stator 2 that faces the magnet 13 in the radial direction. The motor 100 includes a circuit board 7 which is disposed below the body portion 10 and on which the electronic component 71 is mounted. The motor 100 includes a guide portion 56 that guides the airflow, which circulates downward in the top-bottom direction, toward inside in the radial direction below the body portion 10. At least a part of the guide portion 56 faces the electronic component 71 in the radial direction. Therefore, the airflow guided inward in the radial direction by the guide portion 56 can hit the electronic component 71. Therefore, it is possible to improve the efficiency of cooling the electronic component 71.

A bracket 5 attached to a lower portion of the stator 2 is provided and the bracket 5 includes a holding portion 51 that is disposed at the lower portion of the body portion 10 and holds the circuit board 7, the guide portion 56 that is disposed outside in the radial direction and below the holding portion 51, and a connecting portion 57 that connects the holding portion 51 and the guide portion 56 to each other. At least an upper portion of the surface 56a inside the guide portion 56 in the radial direction is inclined inward in the radial direction as the at least an upper portion extends downward. Thereby, the airflow is smoothly guided inward in the radial direction and it is possible to improve the efficiency of cooling the electronic component 71 easily. In addition, since the bracket 5 of the motor 100 has the guide portion 56, it is possible to improve the efficiency of cooling the electronic component 71 irrespective of a shape of a casing of the electric machine or the like in which the motor 100 is mounted.

The guide portion 56 is disposed outside the circuit board 7 in the radial direction. Therefore, when the circuit board 7 is attached to the holding portion 51, it is possible to prevent interference between the guide portion 56 and the circuit board 7. Therefore, it is possible to improve workability when the circuit board 7 is attached to the holding portion 51.

The guide portion 56 extends in the circumferential direction and a plurality of the connecting portions 57 are provided in the circumferential direction. Therefore, the guide portion 56 can be reinforced.

The connecting portion 57 extends outside in the radial direction and downward from an outer peripheral end of the holding portion 51. Thereby, the guide portion 56 can be easily disposed outside in the radial direction and below the holding portion 51.

The holding portion 51 includes a cylindrical portion 53 that covers at least a part of an outside surface of the body portion 10 above the circuit board 7. The electronic component 71 is mounted on a lower surface of the circuit board 7. A cutout portion 53a is provided at the lower end of the cylindrical portion 53. Therefore, heat can be prevented from being accumulated on the upper surface side of the circuit board 7 and it is possible to further improve the efficiency of cooling the electronic component 71.

At least a part of the outer edge portion of the circuit board 7 protrudes further outside in the radial direction than an outer edge of the cylindrical portion 53 when viewed in the axial direction. Therefore, part of the airflow directed downward in the top-bottom direction collides against the outer edge portion of the circuit board 7 and is easily guided inside in the radial direction via the cutout portion 53a. Accordingly, the airflow is also circulated on the upper surface side of the circuit board 7 and it is possible to further improve the efficiency of cooling the electronic component 71.

The cutout portion 53a is disposed at the position same as that of at least a part of the guide portion 56 in the circumferential direction. Thereby, it is possible to simultaneously cool the lower surface side and the upper surface side of the circuit board 7 of the electronic component 71. That is, it is possible to simultaneously cool both sides of the mounting surface side of the electronic component 71 and a leg side of the electronic component 71 on the circuit board 7.

The bracket 5 includes a locking portion 59 for being locked to an inner wall of the duct through which the airflow circulates. The locking portion 59 is positioned outside the guide portion 56 in the radial direction. Thereby, the airflow directed downward in the axial direction without being directed inside in the radial direction can be easily obtained. Therefore, even if the motor 100 is disposed within the duct, it is possible to suppress decrease in the air blowing efficiency of the duct.

A plurality of the guide portions 56 may be provided side by side in the circumferential direction. Thereby, the airflow can easily hit the electronic component 71 from a plurality of directions according to the arrangement of the electronic component 71. Therefore, it is possible to further improve the efficiency of cooling the electronic component 71.

In this case, a gap G may penetrate in the axial direction between the adjacent guide portions 56. Thereby, the airflow flowing downward in the axial direction without being directed inside in the radial direction can be easily obtained.

The guide portion 56 has an arc shape the center of which is the center axis C when viewed in the axial direction. Therefore, while the airflow directed downward in the axial direction is obtained without being directed inside in the radial direction, the airflow hits the electronic component 71 from the plurality of the directions and it is possible to further improve the efficiency of cooling the electronic component 71. In addition, if the guide portion 56 has the arc shape, as compared to a case where the guide portion 56 has a circular shape the center of which is the center axis C when viewed in the axial direction, it is possible to reduce a weight of the motor 100.

For example, as illustrated in Fig. 4, if the electronic components 71 and the guide portion 56 are disposed partially in a predetermined region in the circumferential direction, the airflow hits the electronic component 71 more efficiently. In addition, while reducing the weight of the motor 100, it is possible to obtain the airflow directed downward in the axial direction without being directed inside in the radial direction. In the embodiment, the electronic components 71 include an IC 71e and an electrolytic capacitor 71a.

It is desirable that an inclination angle θ (see Fig. 7) of at least the upper portion of the surface 56a inside the guide portion 56 in the radial direction is 60 degrees or less with respect to the center axis C. Thereby, it is possible to suppress that the airflow circulating downward in the top-bottom direction collides against the surface 56a inside the guide portion 56 in the radial direction to be directed upward or outward in the radial direction.

If the electronic component 71 is mounted to extend in the axial direction and faces the guide portion 56 in the radial direction, it is possible to increase a volume of the air hitting the electronic component 71 and it is possible to further improve the efficiency of cooling the electronic component 71.

The electronic components 71 may include the IC 71e and the IC 71e may be mounted to extend in the axial direction. Therefore, it is possible to increase the volume of the air hitting the IC 71e and it is possible to efficiently cool the IC 71e at high temperature.

The air blowing apparatus 200 includes the motor 100 and the impeller 101 that is provided in the rotor 1 and rotates around the center axis C by driving the motor 100, and the impeller 101 rotates to suck air from the upper side and exhaust the air to the lower side. Therefore, it is possible to easily realize the air blowing apparatus 200 in which the efficiency of cooling the electronic component 71 of the motor 100 is improved.

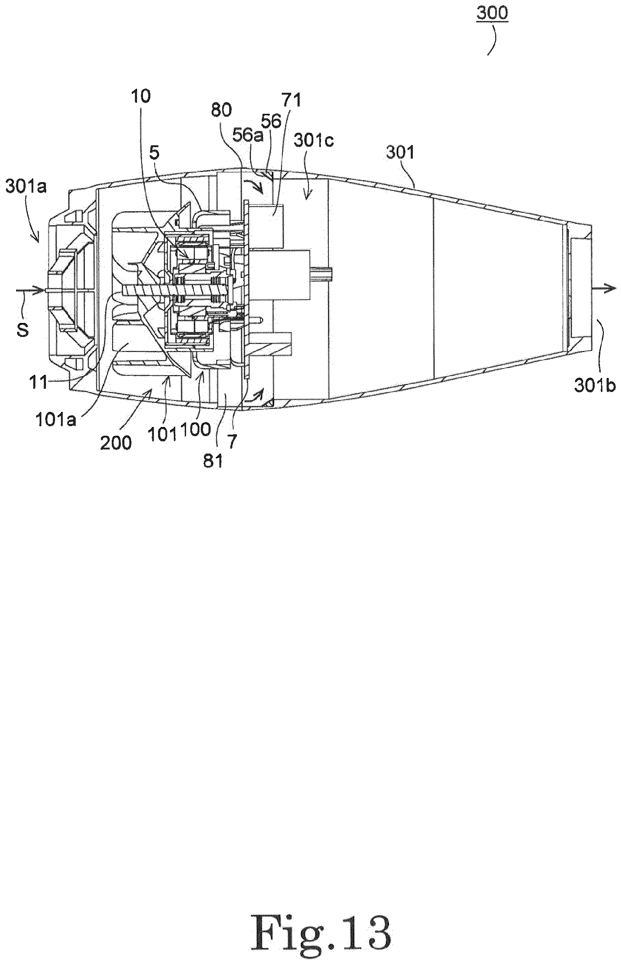

A second embodiment of the invention will be described. Fig. 13 is a side sectional view of a dryer 300 in which an air blowing apparatus 200 including a motor 100 of the second embodiment is mounted. Similarly to Fig. 9, a front side of the dryer 300 in the air blowing direction corresponds to downward in the axial direction of the motor 100. A back side of the dryer 300 in the air blowing direction corresponds to upward in the axial direction of the motor 100. For convenience of explanation, the same reference numerals are given to the same portions as those of the first embodiment illustrated in Figs. 1 to 12, which are described above. In the second embodiment, the arrangement of the guide portion 56 is different. The other portions are the same as those of the first embodiment.

The motor 100 of the second embodiment includes a housing portion 80 that accommodates a body portion 10 therein. An air passage 81 is formed at a gap between an inside surface of the housing portion 80 and the body portion 10. In a state where the motor 100 is mounted in the dryer 300, the air passage 81 communicates with an inlet port 301a and an outlet port 301b. The airflow (arrow S) circulates in the air passage 81 from the back side to the front side.

The housing portion 80 is attached to a dryer housing 301 in the axial direction and the inside surface of the housing portion 80 is substantially parallel to the axial direction.

In the embodiment, the guide portion 56 is provided on the inside surface of the housing portion 80. The guide portion 56 is disposed outside in the radial direction and below the body portion 10. In addition, at least an upper portion of the surface 56a inside the guide portion 56 in the radial direction is inclined inward in the radial direction as it extends downward.

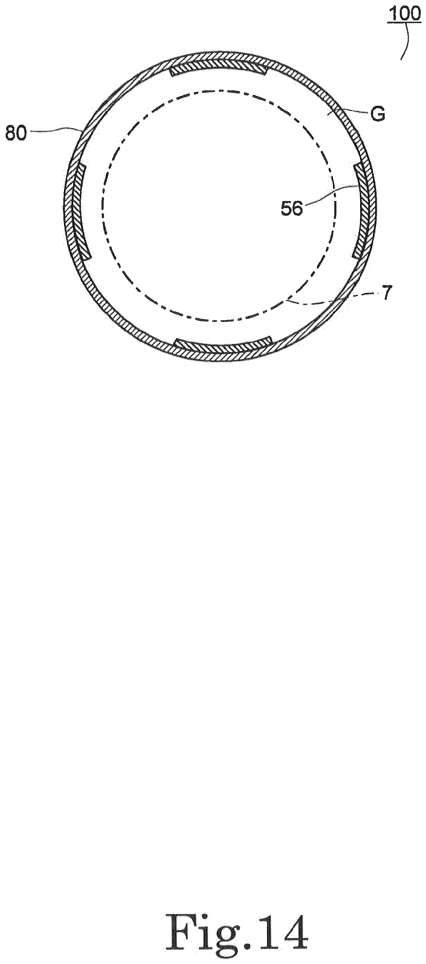

Fig. 14 is a sectional view perpendicular to the axial direction of the motor 100. In the embodiment, four guide portions 56 are disposed side by side at equal intervals in the circumferential direction. The guide portion 56 has an arc shape the center of which is the center axis C when viewed in the axial direction. A gap G penetrates in the axial direction between the adjacent guide portions 56. The number of the guide portions 56 is not limited to four and may be plural other than four. In addition, the guide portion 56 may have a circular shape the center of which is the center axis C when viewed in the axial direction.

In the dryer 300 having the configuration described above, when the air blowing apparatus 200 is driven, the airflow generated by the rotation of the impeller 101 circulates through the air passage 81. Part of the airflow circulating through the air passage 81 is guided inward in the radial direction by the guide portion 56. Thereby, similarly to the first embodiment, it is possible to efficiently cool the electronic component 71.

The inside surface of the housing portion 80 except for the guide portion 56 is substantially parallel to the axial direction. Therefore, a space of the inside of the housing portion 80 can be increased compared to a configuration in which an entire inside surface of the housing portion 80, instead of the guide portion 56, is inclined inward in the radial direction as the surface extends downward.

According to the embodiment, the motor 100 includes a cylindrical housing portion 80 that accommodates a body portion 10 therein. The housing portion 80 forms the air passage 81 through which the airflow (arrow S) circulates in a gap between the housing portion 80 and the body portion 10. The guide portion 56 is provided on the inside surface of the housing portion 80 and is disposed outside in the radial direction and below the body portion 10. At least an upper portion of the surface 56a inside the guide portion 56 in the radial direction is inclined inwardly in the radial direction as the least an upper portion extends downward. Therefore, similarly to the first embodiment, it is possible to improve the efficiency of cooling the electronic component 71.

A bracket 5 attached to a lower portion of the stator 2 is provided and the bracket 5 includes a holding portion 51 that is disposed at the lower portion of the body portion 10 and holds the circuit board 7. The holding portion 51 includes a cylindrical portion 53 that covers at least a part of an outside surface of the body portion 10 above the circuit board 7. The guide portion 56 is disposed outside in the radial direction and below the holding portion 51. The electronic component 71 is mounted on the lower surface of the circuit board 7. A cutout portion 53a is provided at a lower end of the cylindrical portion 53. Therefore, similarly to the first embodiment, heat can be prevented from being accumulated on the upper surface side of the circuit board 7 and it is possible to further improve the efficiency of cooling the electronic component 71.

At least a part of the outer edge portion of the circuit board 7 protrudes further outside in the radial direction than an outer edge of the cylindrical portion 53 when viewed in the axial direction. Therefore, similarly to the first embodiment, the airflow is also easily circulated on the upper surface side of the circuit board 7 and it is possible to further improve the efficiency of cooling the electronic component 71.

The cutout portion 53a is disposed at the position same as that of at least a part of the guide portion 56 in the circumferential direction. Therefore, similarly to the first embodiment, it is possible to simultaneously cool the mounting surface side of the electronic component 71 and a leg side of the electronic component 71 on the circuit board 7.

The motor 100 of the first embodiment and the second embodiment is an outer rotor motor, but it may be an inner rotor motor.

In the first embodiment and the second embodiment, the electronic component 71 is mounted on the lower surface of the circuit board 7, but it may be mounted on the upper surface of the circuit board 7.

In the first embodiment and the second embodiment, the motor 100 is mounted in the dryer 300, but it may be mounted in an electric machine other than the dryer 300. For example, the motor 100 may be mounted in an electric fan, a ventilating fan, a vacuum cleaner, a hair steamer, or the like.

The invention can be used, for example, for a motor including a circuit board on which an electronic component is mounted and an air blowing apparatus including the same.

Features of the above-described preferred embodiments and the modifications thereof may be combined appropriately as long as no conflict arises.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A motor (100) comprising:
a body portion (10) that includes a rotor (1) rotating around a center axis (C) extending in a top-bottom direction and having a magnet (13), and a stator (2) facing the magnet (13) in a radial direction;
a circuit board (7) which is disposed below the body portion (10) and on which an electronic component (71) is mounted; and
a guide portion (56) that guides an airflow circulating downward in the top-bottom direction toward inside in the radial direction below the body portion (10), wherein
at least a part of the guide portion (56) faces the electronic component (71) in the radial direction.

2. The motor (100) according to Claim 1, further comprising:
a bracket (5) that is attached to a lower portion of the stator (2), wherein
the bracket (5) includes
a holding portion (51) that is disposed at a lower portion of the body portion (10) and holds the circuit board (7),
the guide portion (56) that is disposed outside in the radial direction and below the holding portion (51), and
a connecting portion (57) that connects the holding portion (51) and the guide portion (56) to each other, and
at least an upper portion of a surface inside the guide portion (56) in the radial direction is inclined inwardly in the radial direction as the upper portion extends downward.

3. The motor (100) according to Claim 2, wherein
the guide portion (56) is disposed outside the circuit board (7) in the radial direction.

4. The motor (100) according to Claim 2 or 3, wherein
the guide portion (56) extends in a circumferential direction and a plurality of connecting portions (57) that connect the holding portion (51) and the guide portion (56) to each other are provided in the circumferential direction.

5. The motor (100) according to any one of Claims 2 to 4, wherein
the connecting portion (57) extends outside in the radial direction and downward from an outer peripheral end of the holding portion (51).

6. The motor (100) according to any one of Claims 2 to 5, wherein
the holding portion (51) includes a cylindrical portion (53) that covers at least a part of an outside surface of the body portion (10) above the circuit board (7),
the electronic component (71) is mounted on a lower surface of the circuit board (7), and
a cutout portion (53a) is provided at a lower end of the cylindrical portion (53).

7. The motor (100) according to Claim 6, wherein
at least a part of an outer edge portion of the circuit board (7) protrudes further outside in the radial direction than an outer edge of the cylindrical portion (53) when viewed in an axial direction.

8. The motor (100) according to Claim 6 or 7, wherein
the cutout portion (53a) is disposed at a position in a circumferential direction same as a position of at least a part of the guide portion (56).

9. The motor (100) according to any one of Claims 2 to 8, wherein
the bracket (5) includes a locking portion (59) that is locked to an inner wall of a duct through which an airflow circulates, and
the locking portion (59) is positioned further outside than the guide portion (56) in the radial direction.

10. The motor (100) according to Claim 1, further comprising:
a housing portion (80) in a cylindrical shape in which the body portion (10) is accommodated and which forms an air passage (81), through which the airflow circulates, in a gap between the housing portion (80) and the body portion (10), wherein
the guide portion (56) is provided on an inside surface of the housing portion (80) and is disposed further outside in the radial direction and further below than the body portion (10), and
at least an upper portion of an inside surface of the guide portion (56) in the radial direction is inclined inwardly in the radial direction as the upper portion extends downward.

11. The motor (100) according to Claim 10, further comprising:
a bracket (5) that is attached to a lower portion of the stator (2), wherein
the bracket (5) includes a holding portion (51) that is disposed at a lower portion of the body portion (10) and holds the circuit board (7),
the holding portion (51) includes a cylindrical portion (53) that covers at least a part of an outside surface of the body portion (10) above the circuit board (7),
the guide portion (56) is disposed outside in the radial direction and below the holding portion (51),
the electronic component (71) is mounted on a lower surface of the circuit board (7), and
a cutout portion (53a) is provided at a lower end of the cylindrical portion (53).

12. The motor (100) according to Claim 11, wherein
at least a part of an outer edge portion of the circuit board (7) protrudes further outside in the radial direction than an outer edge of the cylindrical portion (53) when viewed in an axial direction.

13. The motor (100) according to Claim 11 or 12, wherein
the cutout portion (53a) is disposed at a position in a circumferential direction same as a position of at least a part of the guide portion (56).

14. The motor (100) according to any one of Claims 2 to 13, wherein
a plurality of guide portions (56) that guide an airflow circulating downward in the top-bottom direction toward inside in the radial direction below the body portion (10) are provided side by side in the circumferential direction.

15. The motor (100) according to Claim 14, wherein
a gap between adjacent guide portions (56) among the plurality of guide portions (56) penetrates in the axial direction.

16. The motor (100) according to any one of Claims 2 to 15, wherein
the guide portion (56) has an arc shape the center of which is the center axis (C) when viewed in the axial direction.

17. The motor (100) according to any one of Claims 14 to 16, wherein
the electronic component (71) and the guide portion (56) are disposed partially in a predetermined region in the circumferential direction.

18. The motor (100) according to any one of Claims 2 to 17, wherein
an inclination angle of at least an upper portion of a surface inside the guide portion (56) in the radial direction is 60 degrees or less with respect to the center axis (C).

19. The motor (100) according to any one of Claims 1 to 18, wherein
the electronic component (71) is mounted to extend in the axial direction and faces the guide portion (56) in the radial direction.

20. The motor (100) according to any one of Claims 1 to 18, wherein
the electronic component (71) includes an IC (71e), and
the IC (71e) is mounted to extend in the axial direction and faces the guide portion (56) in the radial direction.

21. An air blowing apparatus (200) comprising:
the motor (100) according to any one of claims 1 to 20; and
an impeller (101) that is provided in the rotor (1) and rotates around the center axis (C) by driving the motor (100), wherein
the impeller (101) rotates to suck air from an upper side and exhaust the air to a lower side.
